# EUROPÄISCHE PATENTSCHRIFT

(11) **EP 0 644 109 B1**
(45) Veröffentlichungstag und Bekanntmachung des Hinweises auf die Patenterteilung: **12.07.2000**
(21) Anmeldenummer: 94113805.9
(22) Anmeldetag: 02.09.1994
(51) Int. Cl.: B62M 1/00, B62M 1/04

(54) **Trethebelgetriebenes Fahrzeug**
Levers propelled vehicle
Véhicule à propulsion par leviers

(30) Priorität: 03.09.1993 DE 4329814
(43) Veröffentlichungstag der Anmeldung: 22.03.1995
(73) Patentinhaber: Sittler, Thomas, A-6633 Biberwier (AT)
(72) Erfinder: Sittler, Thomas, A-6633 Biberwier (AT)

(56) Entgegenhaltungen:
- DE-C- 214 926
- FR-A- 2 203 470
- US-A- 4 630 839

## Beschreibung

Die Erfindung bezieht sich auf den Antrieb von Fahrzeugen, insbesondere Fahrrädern, durch Trethebel.

Dabei wird die Trethebelbewegung durch Antriebsstränge auf am Antriebsrad beidseitig angeordnete Freiläufe übertragen, und das Übersetzungsverhältnis kann durch Verschieben des Antriebsstrangangriffspunktes auf dem Trethebel verändert werden.

Fast genau einhundert Jahre dauern jetzt die Bemühungen, für das Fahrrad einen Trethebelantrieb zu konstruieren, der prinzipiell einen höheren Wirkungsgrad als der Kurbelantrieb hat und eine stufenlose Schaltung möglich macht. Doch brachten alle bisherigen Varianten nicht den gewünschten Erfolg, da meist ein ungünstiger Winkel zwischen Zugseil und Hebel den Wirkungsgradgewinn wieder zunichte machte, auf den Schaltmechanismus zu hohe Zugkräfte wirkten, für die entstehenden langen Schaltwege keine praktikablen Lösungen angeboten wurden oder die benötigten zwei Zahnräder am Hinterrad dessen Wechsel sehr erschwerten und die Mechanik sehr wartungsunfreundlich machten.

Die deutsche Reichspatentschrift Nr. 112672 stellt schon 1899 ein Trethebelgetriebenes Fahrzeug gemäß dem Oberbegriff der Anspruchs 1 vor, bei dem die Hebel auf der Hinterachse gelagert sind und die beidseitige Tretbewegung mittels in den Trethebeln integrierter Freiläufe auf die Achse übertragen wird, die in den Ausfallenden drehbar gelagert ist.
Diese Achse nimmt über ein auf der rechten Seite zwischen Ausfallende und Nabe angeordnetes Zahnradgetriebe die Nabe mit.

Zwar sind hier die Trethebellager in vorteilhafter Weise mutternartig auf die stabilen Achse geschraubt, da jedoch auch Ausfallenden und Nabenlager aufgeschraubt sind, ist ein Hinterradausbau praktisch unmöglich, und eine Schaltmöglichkeit liegt nicht vor.

In der deutschen Reichspatentschrift Nr. 214926 von 1909 ist ein Trethebelantrieb beschrieben, bei dem die Trethebel 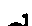 in bekannter Weise auf je einem Ende der Hinterachse mittels eines Kugellagers lose drehbar aufgesetzt" sind. Auf beiden Seiten laufen die Zugseile vom Hebel über eine obere Umlenkrolle zu den Freilaufgesperren im Hinterrad und von dort weiter zu einer Umlenkrolle vor dem Hinterrad, wo ihre Verbindung miteinander zu einer gegenläufigen Pedalbewegung führt.
Jedoch ist hier keine Schaltungsmöglichkeit vorgesehen, und die Seilführung ist offen angelegt.

Das Patent Nr. 87324 von 1920 beschreibt ein Trethebelfahrrad mit auf der Hinterachse gelagerten Trethebeln und darauf verschiebbaren Seilangriffspunkten. Dabei ist jedoch der Gangwechsel wohl kaum während der Fahrt möglich, die Kettenführung ist nicht geschützt und der Hinterradausbau dadurch erschwert, daß die Trethebel außerhalb des Rahmens auf der nicht steckbaren Hinterachse gelagert sind.

Das US Patent 1448724 von 1976 zeigt ein Trethebelfahrrad, bei dem zwar schon das Übersetzungsverhältnis während der Fahrt verändert werden kann, der Bereich aber durch ein winziges Hebelchen unpraktikabel gering bleibt. Auch hier tritt wieder das Problem mit dem Hinterradausbau und der schmutzanfälligen Kettenführung auf.

Es ist ein Trethebelfahrrad bekannt (DDR-Patentschrift 138960 von 1979), bei dem die Trethebel vor dem Hinterrad gelagert sind. Die Antriebskette ist mit einem Ende am Schalthebel befestigt, das andere Ende wird über am Antriebsrad angeordnete Freiläufe geführt. Die Schaltung erfolgt über einen Drehgriff, der durch Bowdenzüge eine Muffe auf dem Schalthebel verschiebt, die die Kette in Richtung Freilauf umlenkt, wodurch die wirksame Länge des Schalthebels verändert wird, bei gleichbleibender Trethebellänge.
Ein Nachteil dieser Konstruktion besteht darin, daß die Länge der Trethebel durch die Lagerung vor dem Hinterrad selbst bei langem Radstand sehr bald vom Vorderrad begrenzt wird und die Kreisbewegung der Pedale noch sehr ausgeprägt ist. Ferner wirkt bei der Muffenverschiebung die gleiche Kraft, die über die Kette am Antriebsrad angreift, auch auf den Drehgriff. In Abhängigkeit von Übersetzung und Gewicht beziehungsweise Leistungsfähigkeit des Fahrers beträgt diese Kraft bis zu 5000 N. Und schließlich erschwert die Anordnung von zwei Zahnkränzen auf dem Hinterrad dessen Aus- und Einbau.

Im US-Patent 3.913.945 von 1975 ist ein Trethebelfahrrad beschrieben, bei dem die Trethebel hinter dem Steuerrohr gelagert sind und nach rückwärts weisen. Beidseitig verläuft jeweils eine Seil- Kettenkombination vom Trethebel über eine Umlenkrolle unter dem Sattel, durch die Kettenstrebe zum Zahnkranz auf dem Freilauf des Hinterrades und von dort weiter durch das vom Steuerrohr bis zum Ausfallende gerade durchlaufende Unterrohr bis zu einer Rückholfeder.
Durch die Lagerung der Trethebel hinter dem Steuerrohr liegt der Drehpunkt unvorteilhaft hoch, wodurch der Fahrer in eine feste Sitzposition gezwungen wird, und so etwa ein Wiegetritt am Berg nicht möglich ist, da sich sonst die wirksame Trethebellänge stark verringert. Eine Benutzung der zur Unterstützung zusätzlich auf den Trethebeln angebrachten Handhebel erscheint sehr unrealistisch und gefährlich. An die Rückholfedern werden materialseitig hohe Ansprüche gestellt, sie sollen die Trethebel mit möglichst gleichmäßiger, nicht nachlassender Kraft über den gesamten Hebelweg zurückholen. Eine Änderung des Übersetztungsverhältnisses muß separat an jedem Trethebel von Hand erfolgen, was beim Alltagsbetrieb im Straßenverkehr, womöglich bepackt mit Kindersitz und Einkaufstasche, schwierig wird.

US-Patent 3.913.947 von 1975 stellt ein Trethebelfahrrad vor, bei dem die Trethebel am Ausfallende gelagert sind und nach vorn weisen. Die Zugseile laufen beidseitig von ihrem festen Angriffspunkt etwa in der Mitte der Trethebel bis zu den Freiläufen unterhalb des Sattels. Beide Freiläufe wirken auf eine gemeinsame Achse mit nur einem Zahnkranz, der über eine Endloskette dann den Zahnkranz des Hinterrades antreibt. Die gegensinnige Pedalbewegung ergibt sich durch ein weiteres Seil, das die Trethebel über eine Umlenkrolle am Sitzrohr verbindet.
Als Schwachpunkt erweisen sich hier die Ausfallenden, die die gesamte Belastung durch die in den Lagern der Trethebel auftretenden Kräfte, insbesonders bei seitlicher Einwirkung, aufnehmen müssen. Ferner zeigt diese Konstruktion auch immer noch sämtliche Merkmale konventioneller Fahrradkonstruktionen in Bezug auf schmutzanfällige Kettenführung und komplizierten Radwechsel. Zudem ist keine Möglichkeit vorgesehen, die Übersetzung zu verändern.

Die deutsche Offenlegungsschrift DE 3332475 A1 von 1985 zeigt einen Trethebelantrieb mit Lagerung der Hebel auf, unter oder vor der Hinterachse. Beiderseits verläuft von einem Anhängepunkt im plattenartigen Ausfallende ein Zugseil über eine Rolle im hinteren Hebelviertel, dann über eine Rolle am oberen Rand des Ausfallendes und ist dann mehrfach um eine Rolle mit eingebautem Freilauf auf dem Hinterrad gewickelt. Von da läuft das Seil weiter und ist über eine Umlenkrolle vor dem Hinterrad mit dem System der anderen Seite verbunden. Zur Änderung des Übersetzungsverhältnisses sind die Anhängepunkte in den Ausfallenden auf einer annähernd senkrechten Zykloidenbahn verschiebbar.
Dabei besteht ein Nachteil darin, daß der Winkel zwischen Zugseil und Trethebel im Bereich zwischen 45° und 60° liegt, was einem Wirkungsgrad von nur 70% - 85% entspricht, und wodurch eine erhebliche Kraft auf das Schaltseil wirkt, wenn größte Übersetzung und untere Trethebelstellung zusammenfallen.
Durch die mehrfache Wicklung des Antriebsseiles um die Rolle am Hinterrad gestaltet sich dessen Ausbau sehr schwierig, und alle wartungsintensiven Mechanikteile liegen ungeschützt.

Das US-Patent 4.630.839 von 1986 bezieht sich im Wesentlichen auf eine Art Fahrrad mit BMX - Rahmengeometrie, was schon durch die spezielle Sitzposition von vornherein den Benutzerkreis drastisch einschränkt. Durch das weit vorne und extrem hoch liegende Tretlager führt die Verwendung der relativ kurzen Trethebel, im Vergleich zur Tretkurbel, nicht zur Steigerung des Wirkungsgrades, da sie in der unteren Position vollkommen senkrecht und in der oberen für einen physiologischen Muskeleinsatz viel zu hoch stehen. Darüber hinaus führt der spitze Winkel zwischen Antriebsstrang und Trethebel in der unteren Hebelstellung zu einer sehr ineffektiven Kraftübertragung. Die Kettenführung verläuft gerade im schmutzintensiven unteren Bereich und in den Ritzeln ungeschützt, und zum Hinterradwechsel sind gleich zwei meist schmutzige und ölige Kettenstränge abzunehmen und wieder zu montieren. Der Schaltvorgang dürfte sowohl von einer enormen Geräuschentwicklung begleitet sein, als auch unter einer extremen Materialbeanspruchung erfolgen, wenn der verschiebbare Schlitten, an dem der Antriebsstrang angreift, unter Vollast von den schwenkbaren Schaltgliedern freigegeben wird und in die nächste Stellung kracht. Als wesentlicher Nachteil des vor dem Hinterrad liegenden Trethebellagers ist die dadurch nicht kreissegmentförmig ausführbare Bahn des Schaltschlittens anzusehen, wodurch die Trethebel, zum Beispiel bei Stellung in gleicher Höhe, schon durch den Schaltvorgang selbst ihre Position verändern, zum größten Gang hin aufwärts, zum kleinsten Gang hin abwärts. Damit verändert sich durch den schaltungsabhängigen Abstand von Sattel und Pedal ständig der für die Beinmuskulatur wichtigste Parameter der Rahmengeometrie, der zur optimalen Kraftübertragung gleich bleiben muß.

Das deutsche Patent 4128723 A1 von 1991 zeigt eine teilbare Hinterradnabe mit Steckachse für ein Tretkurbelfahrrad, bei der nach dem Hinterradausbau der Teil mit den Zahnrädern am Ausfallende verbleiben kann. Der Nachteil besteht in erforderlichen Justierungen, ungeschützter Kettenführung und abgestufter Schaltung.

Das französische Patent 8912491 von 1991 beschreibt eine Nabe für ungekröpfte Speichen, bei der im wesentlichen die Speichen seitlich durch Schlitze eingehängt werden. Dadurch ergibt sich eine stark zerklüftete und damit wartungsunfreundliche Oberfläche.
Die Erfindung, wie sie in den Ansprüchen gekennzeichnet ist, löst die Aufgabe, ein wartungs- und transportfreundliches Fahrrad zu schaffen, das den hohen Wirkungsgrad des Trethebels durch seine bei ausreichender Pedallänge fast geradlinigen Pedalreise mit einer leicht zu bedienenden, stufenlosen Schaltung und einer geschützten Führung des Antriebsstrangs verbindet. Und insbesondere sollte der Hinterradwechsel zur Reifen- und Speichenreperatur ohne Behinderung durch Ketten und Zahnräder für den Durchschnittsradfahrer möglich sein.
Zusätzlich zu den bekannten Vorteilen des Trethebelantriebes wie fehlender Totpunkt, hoher Wirkungsgrad, größere Bodenfreiheit, enorme mögliche Schräglage, Packtaschen oder Kindersitz auf dem Gepäckträger behindern den Tretvorgang nicht, sind die durch die Erfindung erreichten Vorteile im Wesentlichen darin zu sehen, daß sich eine große Trethebellänge durch eine gemeinsame Lagerung der Trethebel mit dem Hinterrad auf einer Steckachse ergibt, was gleichzeitig sowohl eine hohe Seitenstabilität für die Trethebel bedeutet als auch eine Kettenführung im Rahmen und damit ein Belassen der Antriebsmechanik im Rahmen beim Hinterradausbau ermöglicht.
Dadurch, und vor allem auch durch die an Trethebeln leicht realisierbaren hochklappbaren Pedale, läßt sich das Fahrrad besonders leicht transportieren, und die blauen Flecke an den Waden fallen weg. Die Bewältigung der durch den Trethebel bedingten langen Schaltwege geschieht mittels eines schwenkbaren Lenkers. Der Wirkungsgrad liegt je nach Stellung der kreisförmigen Trethebel, mit der oberen Umlenkrolle als Mittelpunkt des Kreises bei Mittelstellung der Trethebel, annähernd bei 100%, da die Züge immer nahezu senkrecht an den Hebeln abgezogen werden.

Ausgehend von einem Fahrzeug der eingangs genannten Art wird nun gemäß der Erfindung durch die Merkmale der kennzeichnenden Teils der Anspruchs 1 der Ausbau der Hinterräder erleichtert.

Im folgenden wird das Prinzip der Erfindung anhand von Zeichnungen näher erläutert, die lediglich einen möglichen Ausführungsweg darstellen.

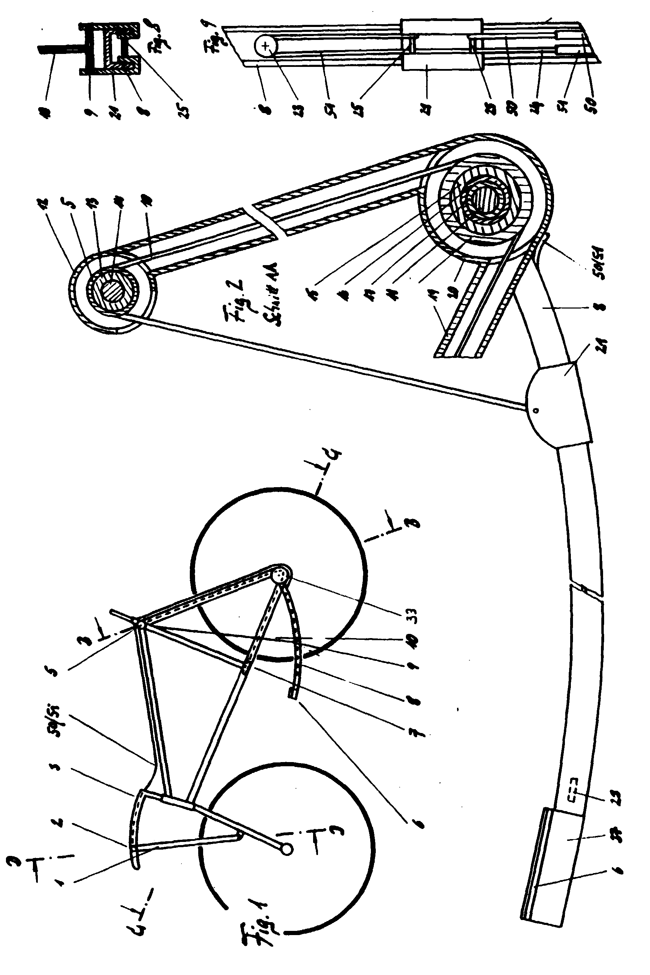

**Figur 1** zeigt in Seitenansicht ein erfindungsgemäßes Fahrrad, wobei der Rahmen beispielsweise als Rohrkonstruktion in Dreiecksform ausgeführt ist. Es kommen jedoch auch andere Profile als das Rohr und andere Formen als das Dreieck, oder eine teilweise oder vollständige, auch freitragende Karosseriekonstruktion (aus dünnen, flächigen Materialien) in Frage. Die Bewegung des linken und rechten Trethebels (8) wird jeweils durch Antriebsstränge (10) über die möglichst hoch unter dein Sattelbereich liegende obere Umlenkung (5) auf die Freiläufe (33) im Hinterrad übertragen, wobei sich die gegenläufige Pedalbewegung aus der Verbindung beider Züge über eine Umlenkung (7) im Bereich vor dem Hinterrad ergibt. Die Antriebsstränge (10) bestehen beispielsweise aus Seilen, Ketten, Riemen etc. oder einer Kombination derselben, und dementsprechend sind die Umlenkungen und Antriebselemente als Seilrollen, Zahnräder, Riemenscheiben etc. ausgeführt. Zur stufenlosen Änderung des Übersetzungsverhältnisses sind die Angriffspunkte (9) der Antriebsstränge (10) auf den Trethebeln (8) über Bowdenzüge (50 und 51) mit einem schwenkbaren Lenker (2), dessen Bewegung mittels einer zweiten Gabel (1) an einer Art verlängertem Vorbau (3) geführt und arretiert werden kann, verschiebbar verbunden. Zum Transport können die Pedale (6) von der waagerechten in die senkrechte Stellung geklappt werden.
**Figur 2** zeigt den Verlauf des rechten Antriebsstrangs (10) vom Schieber (21) auf dem Trethebel (8) über die obere Umlenkung (5) in das Rahmenrohr und dort bis zum Antriebselement (18)auf die Hohlwelle (15) im dosenartigen Ausfallende(20).
**Figur 3** zeigt einen Längsschnitt durch die Steckachse des Hinterrades. Die Steckachse (11) des Hinterrades trägt und verspannt mittels Muttern (31) bzw. Schnellspannern folgende Bauteile zu einer stabilen Einheit:
   - die Hülsen (17/1), auf denen die Trethebel (8) gelagert sind, wobei die Hülsen schon als Lager ausgebildet und auch mit den dosenartigen Ausfallenden (20) fest oder lösbar verbunden sein können.
   - die dosenartigen Ausfallenden (20), an denen der Fahrradrahmen ansetzt und die zur Durchführung der Antriebsstränge (10) an geeigneter Stelle (28) durchbrochen sind.
   - die Hülsen (17/2), auf denen die Hohlwellen (15) mit den Zahnkränzen, Seilrollen, Riemenscheiben und dgl. (18) gelagert sind.
   - die Hülse (17/3), auf der die Nabe (32) gelagert ist.

   Der Vortrieb erfolgt dadurch, daß die jeweilige Trethebelbewegung über den Antriebsstrang (10) die Hohlwelle (15) in Drehung versetzt, die durch eine Kupplung in Form von geeigneten Vorsprüngen, beispielsweise Nut und Feder, Klauen, etc. die Hohlwelle (35) antreibt, die über den Freilauf (33) dann die Nabe (32) mitnimmt. Die Nabe (32) trägt an den Stirnseiten zur Aufnahme der Speichenköpfe eine umlaufende Vertiefung (29), in die die Bohrungen (30) für die Speichen münden, so daß diese achswärts herausgezogen werden können. Die Vertiefung (29) geht in den Hohlraum (52) der dosenartigen Ausfallenden (20) über, die an den Rahmenansätzen zur Durchführung der Antriebsstränge durchbrochen sind (28).In diese von Nabe und Ausfallende gebildete Kammer (29 und 52) kommen so alle schmutzanfälligen Mechanikteile zu liegen, und nach außen weisen bis auf die Speichenbohrungen nur glatte Oberflächen. Zum Ausbau des Hinterrades für den Reifen- oder Speichenwechsel wird die Steckachse (11) herausgezogen. Die oberen Umlenkungen (5) sind beispielsweise bei einer Rahmenkonstruktion aus Rohren in einem kurzen Querrohr (12) auf Schrauben (14) drehbar gelagert (13).

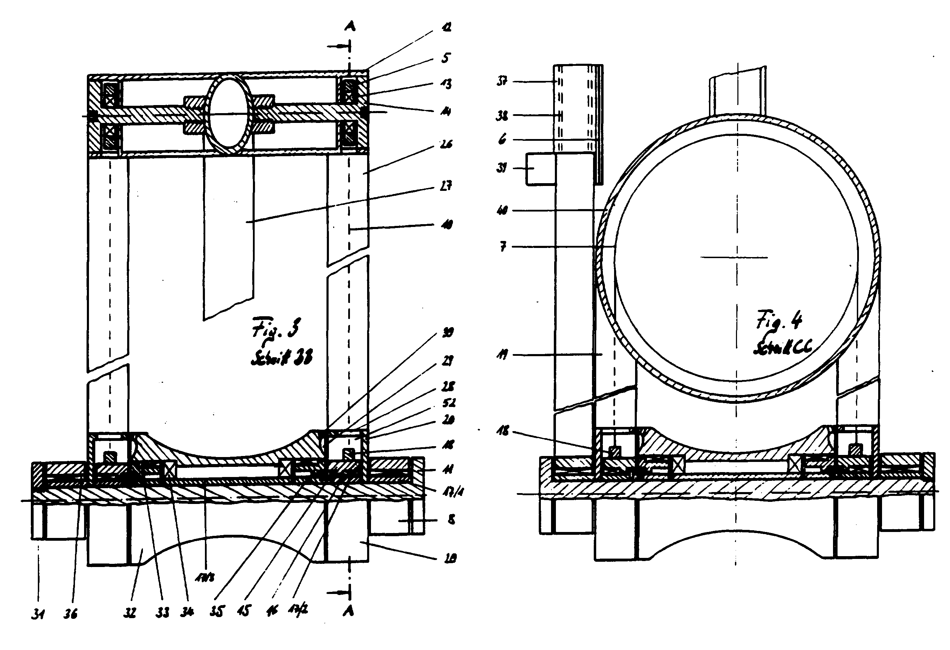

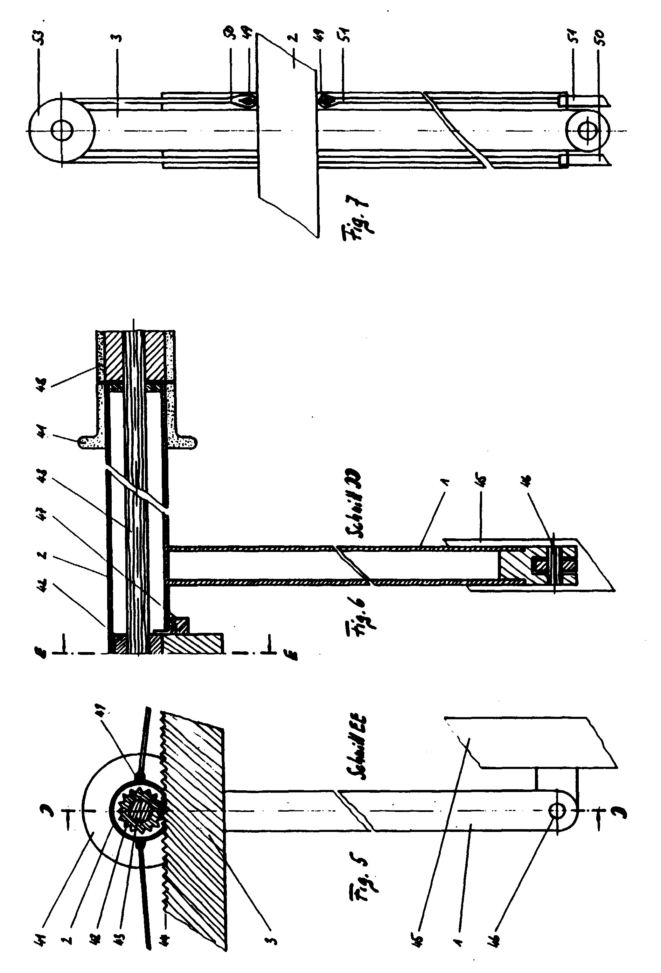

**Figur 4** zeigt eine Schnitt durch die Umlenkung (7) vor dem Hinterrad und die Sicht auf den linken Trethebel bei hochgeklapptem Pedal. Die von den Trethebeln über die obere Umlenkung (5), dann durch den Rahmen laufenden Antriebsstränge (10) beider Seiten werden durch die Rahmenrohre (19) zur Umlenkung (7) vor dem Hinterrad geführt und sind dort miteinander verbunden, wodurch sich die wechselseitige Pedalbewegung zwangsläufig ergibt. Das vordere Ende des Trethebels (8) ist für ein klappbares Pedal zweckmäßig als Rohr (38) gestaltet, auf dem ein zweites Rohrstück(37), auf dem das Pedal (6) befestigt ist, drehbar gelagert ist. In waagerechter Stellung liegt das Pedal auf der Nase (39) auf.
**Figur 5** zeigt einen Längsschnitt durch die lenkervorbauähnliche Führung (3) für den schwenkbaren Lenker (2). An der Fahrradgabel (45) ist mittels Gelenken (46) eine zweite Gabel (1) schwenkbar gelagert. Diese trägt das Lenkerrohr (2) mit einem Zahnrad (42) auf der Achse (43). An den Laschen (49) greifen die Schaltzüge (50/51) an.
**Figur 6** zeigt einen Längsschnitt durch den schwenkbaren Lenker. Über die Achse (43) sind beide Drehgriffenden (48) mit dem Zahnrad (42) verbunden, das in die Zahnstange (44) auf dem Lenkervorbau (3) eingreift. Dadurch kann der Lenker (2) an den feststehenden Griffinnenstücken (41) in die gewünschte Stellung gebracht und dann mit den drehbaren Griffenden (48) in dieser festgehalten werden. In der Rinne (47) liegt der Schaltzug auf.
**Figur 7** zeigt eine Sicht von oben auf den Schaltmechanismus. Die Schaltzüge (50/51) sind über die Laschen (49) mit dem Lenker (2) verbunden, wobei der Zug für den Berggang (50) über die Rolle (53) umgelenkt wird.
**Figur 8** zeigt einen Schnitt durch den Schieber (21) auf dem Trethebel (8) mit der Befestigung (9) für den Antriebsstrang (10) und den Schaltzug (25).
**Figur 9** zeigt den Verschiebemechanismus für den Angriffspunkt des Antriebsstrangs (10) auf dem Trethebel (8) von unten. Die Schaltzüge (50 und 51) verlaufen an der Unterseite des Trethebels (8) zu den Befestigungen (25) im Schieber (21), wobei der Zug für den Schnellgang (51) durch die Rolle (23) am vorderen Ende des Trethebels (8) umgelenkt wird, um den Schieber in die vordere Position ziehen zu können. Durch diesen Schwenkmechanismus ergibt sich für den größten Gang mit vorderster Lenkerstellung eine aerodynamisch günstige und für den kleinsten Gang eine angenehm aufrechte und damit physiologische Sitzposition für den Fahrer, wobei im extremen Gelände eine umgekehrte Anordnung erforderlich sein kann.

Fig. 7 und 9 Der Schnellgang (51) vom Lenker der Fig. 7 ist auf beiden Seiten mit den entsprechenden Zügen (51) der Trethebel (8) aus Fig. 9 verbunden, ebenso der Berggangzug (50) vom. Lenker (2) mit den entsprechenden Zügen (50) der Trethebel (8).

Es wird betont, daß die Erfindung auch auf andere pedalgetriebene Fahrzeuge wie Dreiräder, Tretboote oder dgl. anwendbar ist. Es ist auch nicht erforderlich, daß ein einziger Antriebsstrang zwischen den Trethebeln verläuft, sondern es können zwei getrennte, federbeaufschlagte Antriebsstränge vorgesehen sein, deren Enden beispielsweise unter Zwischenschaltung von Federn in dem Bereich befestigt sind, in dem sich bei der oben beschriebenen Ausführungsform die untere Umlenkung befindet.

## Patentansprüche

1. Trethebelgetriebenes Fahrzeug, insbesondere Fahrrad, mit einem Fahrzeugaufbau mit Ausfallenden (20) zur Befestigung der Antriebsachse (11) des Antriebsrades und mit auf der Antriebsachse (11) gelagerten Trethebeln (8), das durch einen gemeinsamen oder zwei getrennte, von den Trethebeln (8) bewegte bzw. bewegten Antriebsstränge (10) über zwei auf die Nahe (32) des Antriebsrades wirkende Freiläufe (33) angetrieben wird
dadurch gekennzeichnet, daß der bzw. die Antriebastränge (10) unmittelbar auf drehferte Antriebselemente (18) von Hohlwellen (15) wirken, die einerseits drehbar mit den Ausfallenden (20) und andererseits über eine Kupplungseinrichtung axial trennbar, jeweils über eine weitere Hohlwelle (35) kraftschlüssig mit den Freiläufen (33) in Verbindung stehen, und daß die Antriebsachse (11) als Steckachse ausgeführt ist, auf der die Freiläufe (33), die Nabe (32) und die bzw. die weiteren Hohlwellen (15 u. 35) gelagert sind.

2. Trethebelgetriebenes Fahrzeug nach Anspruch 1
dadurch gekennzeichnet, daß mit der Steckachse (11) alle auf ihr gelagerten Bauteile mittels Muttern oder Schnellspannern zusammen mit den Ausfallenden (20) zu einer stabilen Einheit verspannt sind.

3. Trethebelgetriebenes Fahrzeug nach Anspruch 1 oder 2 dadurch gekennzeichnet, daß die Lagerung der Bauteile über lose und/oder feste mit einem oder mehreren Bauteilen verbundene Hülsen (17/1bis 17/3) erfolgt.

4. Trethebelgetriebenes Fahrzeug nach einem der Ansprüche 1 bis 3 dadurch gekennzeichnet, daß die Ausfallenden (20) Dosenform aufweisen und daß die Hohlwellen (15) mit den Antriebselementen (18) innerhalb der von den Ausfallenden umschlossenen Hohlräume (52) angeordnet sind.

5. Trethebelgetriebenes Fahrzeug nach Anspruch 4 dadurch gekennzeichnet, daß die Nabe (32) an den Stirnseiten umlaufende Hohlkehlen (29) zur Aufnahme von Speichenköpfen für das Antriebsrad aufweist, die durch die dosenförmigen Ausfallenden (20) abgedeckt sind.

6. Trethebelgetriebenes Fahrzeug nach einem der Ansprüche 1 bis 5 dadurch gekennzeichnet, daß der bzw. die Antriebsstränge (10) zumindest teilweise innerhalb des Fahrzeugaufbaus verlaufen.

7. Trethebelgetriebenes Fahrzeug nach einem der Ansprüche 1 bis 6 mit einer drehbar am Rahmen befestigten Gabel (45) zur Aufnahme des Vorderrades, welche durch ein Lenkerrohr (2) angelenkt wird und bei dem die Angriffspunkte (9) der Antriebsstränge (10) an den Trethebeln (8) stufenlos verstellbar sind, dadurch gekennzeichnet, daß die Verstellung über eine Verstellvorrichtung durch ein Verschieben des Lenkrohres (2) in Fahrtrichtung erfolgt.

8. Trethebelgetriebenes Fahrzeug nach Anspruch 7 dadurch gekennzeichnet, daß das Lenkerrohr (2) an einer Hilfsgabel (1), die an der Gabel (45) des Fahrrades angelenkt ist, befestigt und entlang eines Lenkervorbaus (3) bewegbar und in ausgewählter Lage an diesem fixierbar ist und daß an dem Lenkerrohr (2) zwei Schaltzüge (50, 51) angebracht sind, welche an den Trethebeln (8) gleitend gelagerte Schieber (21), an denen die Antriebsstränge (10) befestigt sind, ansteuern.

9. Trethebelgetriebenes Fahrzeug nach Anspruch 8 dadurch gekennzeichnet, daß das Lenkerrohr (2) in seinem Inneren eine Achse (43) aufweist, die drehfest mit einem Zahnrad (42) verbunden ist, das in eine Zahnstange (44) des Lenkervorbaus (3) eingreift, und daß die Achse (43) mit zwei Griffen (48) fest verbunden ist, deren Drehposition gegenüber dem Lenkerrohr (2) fixierbar ist.

10. Trethebelgetriebenes Fahrzeug nach Anspruch 8 oder 9 dadurch gekennzeichnet, daß die Schieber (21) durch einen Schaltzug (50) direkt und durch den anderen Schaltzug (51) nach Umlenkung durch eine Rolle (23) am Pedalende der Trethebel (8) angesteuert werden.

## Claims

1. Pedal lever driven vehicle, in particular a cycle having a vehicular structure with rear wheel forks (20) for attaching the drive axle (11) of the drive wheel and having pedal levers (8) located on the drive axle (11), which is driven by a common or two separate drive linkage(s) (10) moved by the pedal levers (8) by means of two free-wheel mechanisms (33) acting on the hub (32) of the drive wheel characterised in that the drive linkage(s) (10) act directly on torsionally resistive drive elements (18) of sleeves (15), which, on the one hand, can be rotated with the rear wheel forks (20) and, on the other hand, are axially separated by way of a coupling device, interconnected in each instance by way of another sleeve (35) with the free-wheel mechanisms (33), and that the drive axle (11) is designed as a full floating axle, on which the free-wheel mechanisms (33), the hub (32) and one or the other sleeves (15 & 35) are located.

2. Pedal lever driven vehicle as claim 1, characterised in that with the fully floating axle (11) all components located thereon are tensioned by means of nuts or quick-securing clamps together with the rear wheel forks (20) to form a stable unit.

3. Pedal lever driven vehicle as claim 1 or 2, characterised in that the location of the components is effected by means of loose and/ or secured sleeves (17/1 to 17/3) connected to one or a plurality of components.

4. Pedal lever driven vehicle according to any of the claims 1 to 3, characterised in that the rear wheel forks (20) are box shaped and that the sleeves (15) are arranged with the drive elements (18) within the cavities (52) surrounded by the rear wheel forks.

5. Pedal lever driven vehicle according to claim 4, characterised in that the hub (32) has peripheral segmental scallops (29) on the end faces for acceptance of spoke heads for the drive wheel, which are covered by the box shaped rear wheel forks (20).

6. Pedal lever driven vehicle according to any of the claims 1 to 5, that the drive linkage(s) (10) at least run(s) partially within the structure of the vehicle.

7. Pedal lever driven vehicle according to any of the claims 1 to 6 having a rotatable fork (45) attached to the frame for acceptance of the front wheel, which is controlled by a steering tube (2) and with which the points of contact (9) of the drive linkage (10) to the pedal levers (8) are adjustable, characterised in that the adjustment is effected by means of an adjustment device by a sliding action of the steering tube (2) in the direction of travel.

8. Pedal lever driven vehicle according to claim 7, characterised in that the steering tube (2) is attached to an auxiliary fork (1), which is hinged on the fork (45) of the cycle and is movable along a steering front part (3) and can be fixed to the said part in a chosen position and that to the steering tube (2) are filled two switch action drawing devices (50,51), which control slides (21) located to slide on the pedal levers (8), to which the drive linkage(s) (10) are attached.

9. Pedal lever driven vehicle according to claim 8, characterised in that the steering tube (2) features therein a axle (43), which is securely connected to prevent rotation to a toothed wheel (42), the wheel meshing in a toothed rack (44) of the front part (3) of the steering system, and that the axle (43) is securely connected to two handles (48), the rotary position of which in relation to the steering tube (2) can be fixed.

10. Pedal lever driven vehicle according to claim 8 or 9, characterised in that the slides (21) are controlled directly by means of a switch action drawing device (50) and by means of another switch action drawing device (51) after diversion by a roller (23) on the pedal end of the pedal lever (8).

## Revendications

1. Véhicule entraîné par levier à pédale, notamment une bicyclette, présentant la structure d'un véhicule muni de fourches de roue arrière (20) pour la fixation de l'axe moteur (11) de la roue motrice et comportant des leviers à pédale (8) logés sur l'axe moteur (11), entraîné par un ou deux éléments de liaison moteurs (10) communs ou séparés déplacés par les leviers à pédale (8) au moyen de deux mécanismes à roue libre (33) agissant sur le moyeu (32) de la roue motrice, caractérisé en ce que le ou les élément(s) de liaison moteur(s) (10) agit(ssent) directement sur les éléments moteurs (18) résistant à la torsion d'arbres creux (15), qui peuvent être mis d'une part en rotation avec les fourches de roue arrière (20) et d'autre part, qui sont séparés axialement au moyen d'un dispositif d'accouplement, relié dans chaque cas par adhérence au moyen d'un autre arbre creux (35) aux mécanismes à roue libre (33), et en ce que l'arbre du moteur (11) est conçu comme essieu full-floating, sur lequel les mécanismes à roue libre (33), le moyeu (32) et l'un ou l'autre arbre creux (15 et 35) sont logés.

2. Véhicule entraîné par levier à pédale selon la revendication 1 caractérisé en ce qu'avec l'essieu full-floating (11) tous les composants logés sur celui-à sont tendus au moyen d'écrous ou de tendeurs à serrage rapide avec les fourches de roue arrière (20) pour constituer une unité stable.

3. Véhicule entraîné par levier à pédale selon les revendications 1 ou 2 caractérisé en ce que le logement des composants s'effectue au moyen de douilles (17/1bis 17/3) amovibles et/ou fixes reliées à un composant ou à une pluralité de composants.

4. Véhicule entraîné par levier à pédale selon l'une des revendications 1 à 3 caractérisé en ce que les fourches de roue mobile (20) présentent une forme de boîte et en ce que les arbres creux (15) sont agencés avec les éléments moteur (18) dans les cavités (52) entourées par les fourches de roue arrière.

5. Véhicule entraîné par levier à pédale selon la revendication 4 caractérisé en ce que le moyeu (32) présente des congés rotatifs aux faces avant destinés à recevoir les têtes de rayon pour la roue motrice, qui sont recouverts par les fourches de roue arrière en forme de boîte.

6. Véhicule entraîné par levier à pédale selon l'une des revendications 1 à 5 caractérisé en ce que le(les) élément(s) de liaison moteur(s) (10) passe(nt) au moins partiellement dans la structure du véhicule.

7. Véhicule entraîné par levier à pédale selon l'une des revendications 1 à 6 comportant une fourche rotative (45) fixée au cadre pour le logement de la roue avant, qui est articulée par un tube de direction (2) et dont les points d'attaque (9) des éléments de liaison moteurs (10) sont réglables en continu sur les leviers à pédale (8), caractérisé en ce que le réglage s'effectue au moyen d'un dispositif de réglage en déplaçant le tube de direction (2) dans le sens de la marche.

8. Véhicule entraîné par levier à pédale selon la revendication 7 caractérisé en ce que le tube de direction (2) est fixé à une fourche auxiliaire (1), articulée sur la fourche (45) de a bicyclette et peut être déplacé le long d'une pièce frontale de direction (3) et peut être fixé a ladite pièce dans une position sélectionnée et en ce que deux tirants de commande (50, 51) sont agencés sur le tube de direction (2) qui commande des coulisseaux (21) logés de manière coulissante sur les leviers à pédale (8), sur lesquels les éléments de liaison moteurs (10) sont fixés.

9. Véhicule entraîné par levier à pédale selon la revendication 8, caractérisé en ce que le tube de direction (2) présente à l'intérieur de celui-ci un axe (43) relié de manière à résister à la torsion à une roue dentée (42), qui engrène dans une crémaillère (44) de la pièce frontale de direction (3), et en ce que l'axe (43) est solidarisé à deux poignées (48), dont la position rotative peut être fixée par rapport au tube de direction (2).

10. Véhicule entraîné par levier à pédale selon la revendication 8 ou 9 caractérisé en ce que les coulisseaux (21) sont commandés directement au moyen d'un tirant de commande (50) et d'un autre tirant de commande (51) après déviation par un galet (23) à l'extrémité de la pédale du levier à pédale (8).
